# DEMANDE DE BREVET EUROPEEN

(11) **EP 0 863 685 A1**
(43) Date de publication de la demande: **09.09.1998**
(21) Numéro de dépôt: 98400523.1
(22) Date de dépôt: 05.03.1998
(51) Int. Cl.: H04Q 7/24, H04Q 7/26

(54) **Acheminement d'appels dans un réseau privé international de communications radiomobile**

(30) Priorité: 06.03.1997 FR 9702672
(71) Demandeur: ALCATEL ALSTHOM COMPAGNIE GENERALE D'ELECTRICITE, 75008 Paris (FR)
(72) Inventeur: Vasnier, Frédéric, 92700 Colombes (FR)
(74) Mandataire: El Manouni, Josiane

(57) **Abrégé**

Système de communication, pour organisation dont les communications sont assurées par un réseau privé (1) international et par au moins un autre réseau (7ou 8), qui permet à un utilisateur d'un terminal radiomobile (5) de préempter l'établissement d'une communication par le réseau privé, à partir d'un noeud (2) de ce réseau auquel il accède depuis une station de base d'un réseau radio (7).

Chaque terminal radiomobile du système comporte des moyens (12) pour combiner un code du pays où il se trouve, reçu d'une station de base avec une indication d'identification de noeud qu'il stocke et pour assurer une numérotation d'appel comportant un code d'identification d'un noeud et un code d'appel de terminal. Les noeuds du réseau privé comportent des moyens (0) pour permettre l'établissement d'un appel vers un terminal à partir du code d'appel de ce terminal parvenu au noeud avec un code d'identification de ce noeud.

## Description

L'invention concerne un système de communication pour organisation et notamment entreprise dont les communications sont assurées d'une part à travers un réseau de télécommunications privé à extension internationale et d'autre part à travers au moins un autre réseau de télécommunications. ces réseaux permettant l'établissement de communications entre utilisateurs par l'intermédiaire de terminaux dont au moins certains sont des terminaux radiomobiles conçus pour communiquer dans le cadre d'un réseau radio cellulaire numérique de type système global de communications entre mobiles GSM ou DECT.

Comme il est connu toute communication impliquant un terminal radiomobile est établie par l'intermédiaire d'une station de base du réseau cellulaire à portée radio de laquelle le terminal radiomobile est situé, au moins pendant une partie de la communication. Cette station de base est reliée à un sous-système d'acheminement, le plus souvent de type réseau de télécommunications fixe, par l'intermédiaire duquel la communication entre le terminal radiomobile et un autre terminal appelé ou appelant est acheminée. La station de base fait généralement partie d'un sous-système radio qui assure et gère l'ensemble des transmissions par voie radio avec les terminaux mobiles et qui comporte généralement une pluralité de stations de base géographiquement réparties sur le territoire de couverture offert aux terminaux radiomobiles.

Dans de nombreux cas, le sous-système d'acheminement est réalisé en exploitant des parties préalablement existantes de réseaux fixes et notamment de réseaux commutés de télécommunications, il a alors une structure au moins partiellement maillée et il comporte généralement une pluralité de noeuds d'interconnexion. Il existe alors usuellement plusieurs possibilités de choix de chemin de liaison entre un appelant et un appelé, le choix étant réalisé par le ou les gestionnaire(s) du ou des réseau(x) susceptible(s) d'être utilisé(s) pour une même communication. Comme il est connu, les coûts et conditions de communication sont susceptibles de varier notablement en fonction du chemin sélectionné lorsque plusieurs possibilités coexistent.

Ceci est notamment exploitable par les grandes organisations et notamment les grandes entreprises évoquées plus haut dont au moins certaines des communications sont susceptibles d'être assurées soit par un réseau privé qui leur est propre, soit par au moins un autre réseau public et/ou partagé. Le choix peut en effet être réalisé par la structure de gestion du réseau privé en fonction des possibilités et des besoins.

Une telle exploitation dans le cas de communications impliquant un terminal radiomobile est intéressante, notamment en matière de coût pour l'organisation.

Or si un terminal radiomobile permet un utilisateur d'avoir l'initiative de ses appels dès qu'il est à portée radio d'une station de base d'un réseau radio cellulaire numérique avec lequel il est compatible. il n'est usuellement pas prévu qu'il permette à l'utilisateur de préempter un chemin de communication vers un terminal avec lequel il veut communiquer depuis la station de base qu'il va utiliser en tant qu'intermédiaire.

La présente invention propose donc un système de communication pour organisation et notamment entreprise, dont les communications sont assurées d'une part au travers d'un réseau de télécommunications privé à extension internationale et d'autre part au travers au moins un autre réseau de télécommunications qui permettent à un utilisateur d'un terminal radiomobile accrédité de préempter l'établissement d'un chemin de communication par l'intermédiaire du réseau privé de l'organisation vers le terminal appelé, à partir d'un noeud de ce réseau privé auquel il accède depuis une station de base émettrice-réceptrice d'un réseau radio cellulaire numérique avec laquelle il entre en communication lorsqu'il appelle.

Selon une caractéristique de l'invention, chaque terminal radiomobile accrédité comporte des moyens pour combiner un code d'identification de la zone géographique, c'est-à-dire généralement du pays, où il se trouve, qui est radio-transmis par une station de base avec laquelle ce terminal est en communication, avec une des indications codées, identifiant individuellement au moins certains des noeuds du réseau privé situés dans diverses zones, qui sont stockées au niveau du terminal pour produire l'envoi par le terminal radiomobile d'une numérotation d'appel comportant un code d'identification d'un des noeuds de réseau privé et un code d'appel de terminal et en ce que les noeuds du réseau privé qui sont susceptibles d'être ainsi désignés comportent des moyens pour permettre l'établissement d'un appel vers un terminal partir du code d'appel de ce terminal parvenu au noeud avec un code d'identification propre à ce noeud.

L'invention propose aussi un terminal radiomobile pour système de communication d'une organisation et notamment d'une entreprise, dont les communications sont assurées d'une part au travers d'un réseau de télécommunications privé à extension internationale et d'autre part au travers au moins un autre réseau de télécommunications qui permettent l'un et l'autre à un utilisateur d'un terminal radiomobile accrédité de préempter l'établissement d'au moins une partie d'un chemin de communication par l'intermédiaire du réseau privé de l'organisation vers le terminal appelé, à partir d'un noeud de ce réseau privé auquel il accède depuis une station de base émettrice-réceptrice de réseau radio cellulaire numérique avec laquelle il entre en communication lorsqu'il appelle.

Selon une caractéristique de l'invention, ce terminal comporte des moyens pour combiner un code d'identification de la zone géographique où se trouve le terminal, qui est radio-transmis par une station de base avec laquelle ce terminal est en communication, avec une des indications codées, identifiant individuellement des noeuds du réseau privé dans les diverses zones, qui sont stockées au niveau de ce terminal pour lui permettre de produire et émettre une numérotation d'appel associant un code d'identification d'un des noeuds de réseau privé à un code d'appel d'un terminal.

L'invention, ses caractéristiques et ses avantages sont précisés dans la description qui suit en liaison avec les figures évoquées ci-dessous.

La figure 1 présente un schéma de principe d'un système de communication multiréseau pour organisation disposant de terminaux radiomobiles.

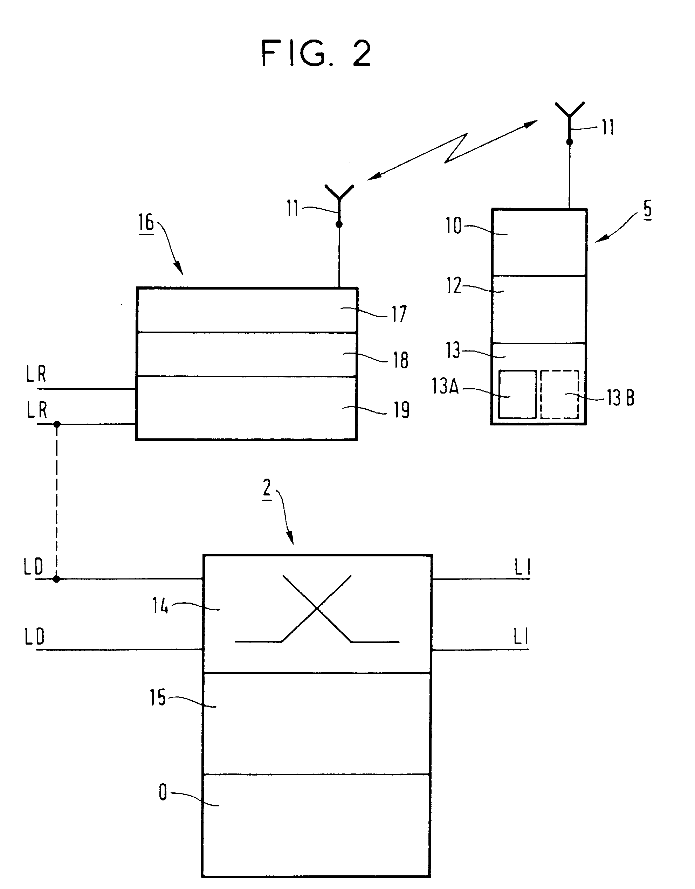

La figure 2 présente un schéma relatif trois des éléments essentiels impliqués dans une communication établie à partir d'un terminal radiomobile, via une station de base et un noeud de communication.

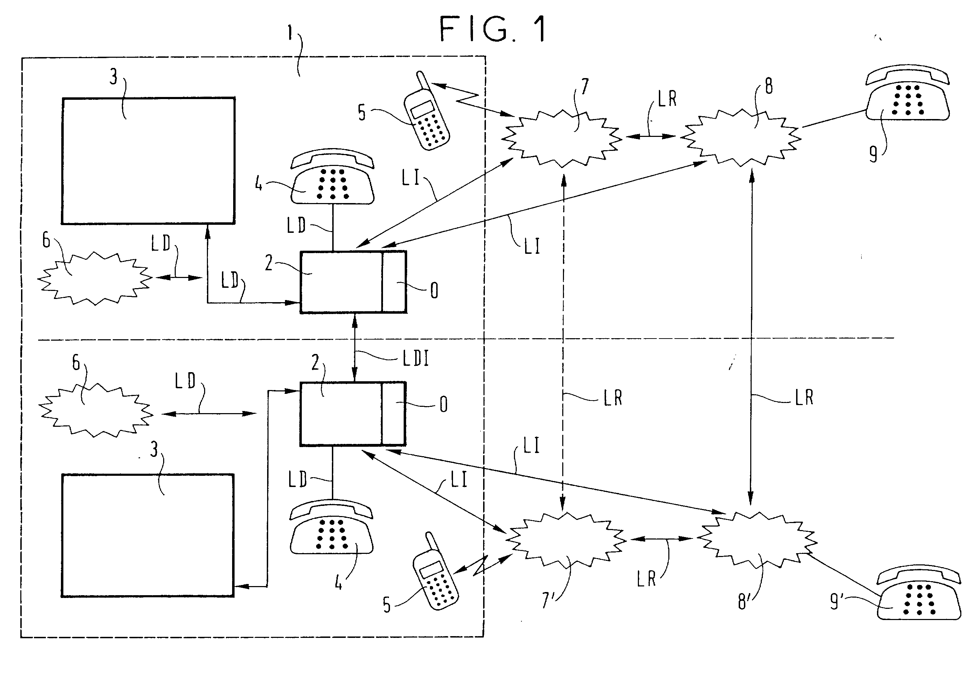

Le système de communication multiréseau présenté en figure 1 est supposé destiné à assurer les communications d'une organisation, par exemple une entreprise multinationale, qui dispose d'un réseau de télécommunications privé 1. Ce réseau comporte une pluralité de noeuds 2 organisés chacun autour d'un commutateur qui a une position géographique déterminée et par l'intermédiaire duquel transitent des communications établies entre des terminaux qui sont reliés à lui par voie filaire ou par voie radio. Les communications s'établissent soit directement soit par l'intermédiaire d'autres noeuds qui sont susceptibles d'être des noeuds du réseau 1 ou des noeuds d'un ou de plusieurs autres réseaux de télécommunications dont l'exploitation est prévue partagée, tels par exemple des réseaux publics.

Les noeuds du réseau privé 1 sont organisés autour d'au moins un commutateur de manière à permettre l'établissement de communications de type voix et/ou données, de manière synchrone ou asynchrone. Au moins certains d'entre eux comportent aussi un équipement d'interface 0 leur permettant de traiter au moins une partie des informations qui sont transmises au cours des communications transitant par un réseau radio cellulaire numérique de communication.

Chaque noeud est équipé de liaisons de communication qui le relient usuellement en point à point à d'autres noeuds, en fonction des besoins et des possibilités locales. Les communications entre deux noeuds du réseau privé 1 sont susceptibles d'être établies de différentes manières et en particulier par l'intermédiaire de liaisons LD, dites dédiées, qui sont uniquement exploitées par l'organisation ayant la disposition du réseau 1, et/ou par l'intermédiaire de liaisons. dites d'interface. LI entre réseaux qui ne sont usuellement exploitées que sur appel et pour une durée le plus souvent limitée.

Ces liaisons utilisent des moyens matériels fixes qui sont susceptibles d'assurer des transmissions par voie électrique, optique et ou radio-électrique, suivant les situations.

L'ensemble des noeuds 2 du réseau privé est supposé supervisé par une entité de supervision comportant un ou plusieurs centres de gestion 3 qui est chargée de gérer le trafic interne au réseau. Cette entité assure éventuellement l'interface en matière de gestion de trafic avec les entités correspondantes des autres réseaux avec lesquels ou par l'intermédiaire desquels le réseau 1 est susceptible d'être amené à communiquer.

Dans une forme préférée de réalisation, au moins certaines des liaisons entre noeuds 2 du réseau privé sont organisées en une structure particulière de communication, de type dit "Intranet", et sont gérées de manière coordonnée par l'entité de supervision de ce réseau privé.

Le réseau privé 1 est supposé mettre une pluralité de terminaux de communication à disposition des utilisateurs accrédités par l'organisation qui l'exploite. Ces terminaux sont ici scindés en terminaux fixes 4 et en terminaux radiomobiles 5. Les terminaux 4 comprennent tous les appareils dont les communications respectives s'établissent nécessairement par l'intermédiaire du noeud auquel ils sont rattachés de manière fixe et usuellement par fil ou câble. Ils comprennent aussi les appareils terminaux dotés d'une base émettrice-réceptrice fixe prévue pour permettre l'utilisation d'un combiné mobile émetteur-récepteur à faible portée.

Les terminaux radiomobiles sont ici supposés être des terminaux de réseau radio cellulaire numérique, comme déjà indiqué, et en particulier des terminaux compatibles avec un système tel que le système de communications mondial entre mobiles désigné par l'acronyme GSM et/ou le système européen désigné par l'acronyme DECT.

Dans l'exemple schématisé sur la figure 1, on a supposé deux zones, c'est-à-dire généralement deux pays, dont une frontière commune est symbolisée par un trait pointillé médian horizontal et où une organisation dispose d'un réseau privé 1 qui comporte au moins un noeud 2 dans chaque zone et où les utilisateurs accrédités de l'organisation disposent de terminaux fixes 4 et/ou mobiles 5. Il a été figuré ici un centre de gestion 3 de l'entité de supervision du réseau privé 1 dans chacune des zones.

Chacun des noeuds 2 est supposé relié par une pluralité de liaisons dédiées LD aux terminaux fixes 4 des utilisateurs accrédités de l'organisation dans la zone où il est situé.

Au moins certains de ces terminaux sont susceptibles d'être reliés au noeud 2 par une liaison LD raccordée à une structure de communication 6 partagée, par exemple un réseau local de type LAN.

Les deux noeuds 2 de la figure 1 qui sont supposés situés dans des zones différentes sont aussi supposés reliés entre eux par au moins une liaison internationale dédiée LDI, ainsi qu'éventuellement par l'intermédiaire d'au moins un autre réseau de communication qui est indépendant de l'organisation.

Dans l'exemple présenté, il a été supposé que chaque noeud 2 du réseau privé 1 est relié par des liaisons d'interface LI, d'une part, un noeud non représenté d'un réseau radio cellulaire numérique 7 ou 7', ici supposé de type GSM, et, d'autre part, un noeud non représenté d'un réseau de communication 8 ou 8', indépendant de l'organisation; par exemple un réseau de commutation téléphonique, du type classiquement désigné par l'acronyme PTSN. Il a également été supposé qu'il existe des liaisons LR entre noeuds des réseaux 8 et 8', ainsi qu'éventuellement entre noeuds des réseaux 7 et 7'. Il est aussi prévu des liaisons entre noeuds des réseaux 7, 8 et 7', 8'. Les uns et les autres permettent la mise en communication de terminaux autres que ceux du réseau privé 1, comme le symbolisent les terminaux 9 et 9' pour les réseaux 8 et 8'.

Un système de communication ainsi organisé permet classiquement à un utilisateur équipé d'un terminal fixe, qui est relié au réseau privé 1 et qui est situé dans une des zones, d'entrer en communication avec un autre utilisateur aussi équipé d'un terminal fixe relié au réseau privé et cela via les seules liaisons de ce réseau privé.

Le choix d'un chemin de communication, soit via le seul réseau privé, soit via au moins une partie de ce réseau privé et une partie d'un réseau indépendant pour l'établissement d'une communication peut éventuellement être laissé à l'initiative de l'utilisateur appelant équipé d'un terminal radiomobile selon l'invention, il peut aussi être placé sous le contrôle de l'entité de supervision ou plus particulièrement d'un centre de gestion 3 de cette entité.

Ceci est classiquement obtenu par utilisation de codes d'appe!s différents qui permettent de préempter un chemin plutôt qu'un autre pour une communication.

Selon un exemple de mise en oeuvre de l'invention, il est prévu de permettre à un utilisateur, que l'on appelle ici utilisateur accrédité, du réseau privé 1 qui dispose d'un terminal radiomobile 5 d'avoir l'initiative dans le choix du chemin à établir pour une communication qu'il demande vers un autre utilisateur présent dans une autre zone que celle où lui-même se trouve, de manière que ce chemin emprunte au moins l'une des liaisons internationales dédiées LDI dudit réseau privé 1, dès que cela est réalisable.

A cet effet, un terminal radiomobile 5, permettant un tel choix, comporte des moyens spécifiques qui sont associés aux moyens dont dispose usuellement un terminal radiomobile pour communiquer avec un autre terminal fixe ou radiomobile par l'intermédiaire d'un réseau radio cellulaire numérique, tel que 7 ou 7', à portée radio duquel il est situé.

Les moyens usuels dont dispose un terminal radiomobile sont connus de l'homme de métier et ne sont donc pas développés ici. Ils combinent des moyens de radiocommunication, des moyens de gestion des diverses opérations de communication 12 et des moyens permettant de conserver des informations 13. Les moyens de radiocommunication sont ici représentés par un ensemble émetteur récepteur 10 raccordé à une antenne 11. Les moyens de gestion 12 sont organisés autour d'au moins un processeur dûment programmé, les programmes étant stockés par les moyens de conservation 13 qui sont constitués de mémoires ayant des localisations et des types définis qui diffèrent en fonction des contraintes et des besoins.

Les terminaux radiomobiles comportent des mémoires fixes 13A qui sont montées à demeure et des mémoires d'individualisation 13B amovibles, prévues pour être mises en place et retirées après assemblage du terminal. Ces mémoires d'individualisation sont par exemple incorporées dans un module enfichable, tel qu'un module d'identification d'abonné, dit module SIM, dont la connexion est nécessaire au fonctionnement de ce terminal. Ce module SIM est affecté à un utilisateur déterminé et contient des indications codées d'identification de cet abonné et de personnalisation du terminal en matière d'exploitation, ces dernières étant notamment liées au type d'abonnement souscrit par et/ou pour cet utilisateur.

Dans le cas présent, il est prévu de stocker des données correspondant à des indications codées d'identification relatives aux noeuds du réseau privé auprès duquel un utilisateur est accrédité, dans une mémoire 13A ou 13B du terminal radiomobile qui lui est affecté.

Les indications codées d'identification des noeuds sont classiquement prévues de type numérique ou alphanumériques de même que les numéros d'appel des terminaux, comme ces numéros elles sont susceptibles d'être conservées en mémoire sous forme de données binaires et transcodées pour transmission par exemple en code multifréquence.

Un code d'identification de noeud est ainsi obtenu par transcodage à partir des indications d'identification propres ce noeud. Les codes d'identification des noeuds stockés dans un terminal radiomobile sont destinés à être exploités pour établir des appels interzones, dans les zones où ce terminal est susceptible d'être emmené par un utilisateur.

La mise en mémoire et le rafraichissement des données d'identification de noeud d'au moins certains des noeuds d'un réseau privé sont susceptibles d'être réalisés, soit par l'utilisateur accrédité lui-même par mise en oeuvre d'un programme d'introduction de données d'annuaire au niveau du terminal radiomobile qu'il exploite. soit encore, par exemple, par une mise à jour télétransmise qui est effectuée à l'occasion d'une mise en communication du terminal radiomobile avec un des noeuds du réseau privé 1.

Il est par ailleurs connu que les réseaux radio cellulaires numériques actuels émettent par voie radio à destination des terminaux radiomobiles des codes d'identification de zone permettant à chaque terminal de savoir la zone géographique où se trouve une station de base 16 avec laquelle il est à même de communiquer sur le moment. Chaque zone géographique correspond actuellement à un pays différent et le code d'identification qui lui correspond est couramment appelé code de pays en conséquence. Pour des raisons de généralisation, le terme "zone" est le plus souvent substitué au terme "pays" dans le présent document, dans la mesure où le système selon l'invention est potentiellement exploitable avec une division géographique où les zones correspondraient à des groupes de pays ou alternativement comprendraient des parties de pays séparément identifiables.

Ainsi un utilisateur de terminal radiomobile, par exemple un terminal de type GSM, peut pratiquement à tout instant connaître la zone où il se trouve et éventuellement toute zone limitrophe avec une station de base 16 de laquelle il communique ou peut communiquer suivant sa localisation présente. Selon l'invention, les combinaisons de données binaires transcodées en inverse à partir de ces codes d'identification de zone sont combinés par les moyens de gestion 12 des terminaux radiomobiles 5 d'une organisation exploitant un système selon l'invention avec les données d'identification des noeuds du réseau privé de cette organisation qui sont stockées dans une des mémoires 13A ou 13B des terminaux radiomobiles équipés à cette fin. Ceci permet à chacun de ces terminaux de produire une information exploitable pour préempter l'établissement d'au moins une partie du chemin de communication par le réseau privé de l'organisation dans le cas d'un appel international sortant lancé par ce terminal.

Il est bien entendu possible d'exploiter de différentes manières la combinaison obtenue à partir d'un code d'identification de zone et avec une des indications d'identification des noeuds de réseau privé stockées dans un terminal radiomobile, suivant le contenu de ces informations et suivant les organisations respectives des réseaux de communication concernés, notamment en ce qui concerne les noeuds et leurs liaisons d'interconnexion.

Actuellement, comme déjà indiqué, le code d'identification de zone fourni à un terminal radiomobile, par une station de base 16 à portée radio de laquelle il est situé, se rapporte généralement au pays où se trouve alors le terminal, étant entendu que tel n'est pas nécessairement le cas lorsqu'un ce terminal se trouve dans une région limitrophe entre zones, ou pays.

Dans l'exemple envisagé ici, quel que soit le cas, la combinaison transcodée en inverse à partir d'un code d'identification de zone, émis par un émetteur-récepteur 17 d'une station de base 16, est exploitée pour sélectionner une des indications d'identification de noeud de réseau privé par le terminal radiomobile selon l'invention qui prend en compte cette indication.

Cette prise en compte est par exemple déclenchée par l'utilisateur du terminal radiomobile qui sélectionne une option prévue sur son terminal équipé et/ou programmé à cet effet. Alternativement, elle peut être programmée automatiquement en phase de d'initialisation d'un appel interzone dès détection par les moyens de gestion d'un terminal accrédité d'une action de l'utilisateur qui est caractéristique d'une demande d'appel interzone, par exemple un appui d'une touche déterminée dans le cadre d'une suite d'opérations déterminées.

Cet appui sur une touche appropriée permet par exemple de sélectionner le menu désiré, comme usuel en la matière. La sélection de l'option, parmi celles proposées par le menu qui les comporte, par une opération similaire entraîne par exemple la prise en compte du code d'identification de zone alors reçu par le terminal aux fins de sélection des indications d'identification du noeud de réseau privé destiné à être utilisé pour l'établissement d'une communication interzone par le terminal. Le code d'identification de ce noeud est alors obtenu par transcodage par exemple au niveau des moyens de gestion 12 du terminal et il est associé au code d'appel du terminal à atteindre qu'à sélectionné l'utilisateur afin d'être émis avec ce code d'appel vers la station de base 16 à portée radio de laquelle sont le terminal et son utilisateur. Dans le cas d'un terminal GSM, les données correspondant au code d'identification d'appel d'un terminal et le code d'identification du noeud de réseau privé par l'intermédiaire duquel la communication doit être établie sont associées dans un même paquet de données, dit initial, qui est émis par voie radio par le terminal après transcodage des données qu'il contient en vue de cette émission.

Le code d'identification de noeud reçu d'un terminal radiomobile par la station de base 16 avec laquelle il est en communication est exploité par l'unité de gestion 18 cette station pour établir une communication avec le noeud de réseau privé ainsi identifié, via une interface de communication réseau 19. Cette communication s'établit depuis l'interface de communication réseau 19 par l'intermédiaire du sous-système d'acheminement du réseau radio cellulaire numérique qui comporte la station et via au moins une des liaisons d'interface LI établies entre le réseau privé et le réseau radio.

Les informations utiles, telles que notamment le code d'identification de noeud et le code d'appel de terminal, contenues dans le paquet initial reçu du terminal radiomobile par la station de base 16 sont transmises, après transcodage inverse et mise en forme appropriée, vers le noeud destinataire, via le chemin établi entre cette station et ce noeud, de même que la partie à transmettre des paquets ultérieurement émis pour la même communication par le terminal radiomobile radio. Ce code d'identification et ce code d'appel sont récupérés au niveau du noeud 2 identifié qui est classiquement un commutateur, de type couramment dénommé PABX, notamment doté d'un commutateur numérique 14 auquel sont reliées les liaisons d'interface LI et les liaisons dédiées LD par l'intermédiaire desquelles ce commutateur communique.

Ce commutateur constituant un noeud 2 comporte aussi une unité de gestion 15 classiquement organisée autour d'au moins un processeur, non représenté, et un équipement d'interface 0 lui permettant de traiter au moins une partie des informations qui sont transmises au cours des communications transitant par un réseau radio cellulaire numérique. L'équipement d'interface 0 reçoit au moins une partie des informations utiles d'un paquet initial et vérifie que ce paquet lui est bien destiné par comparaison du code d'identification contenu dans ce paquet avec celui du noeud qui le comporte. Si tel est le cas, cet équipement d'interface prend en compte le code d'appel contenu dans ce paquet initial et se met en communication avec l'unité de gestion 15 du noeud afin de faire établir un chemin de communication depuis ce noeud vers le terminal dont le code d'appel a été reçu. L'unité de gestion du noeud se met en liaison avec l'entité de gestion du réseau privé dont elle fait partie afin d'obtenir l'établissement du chemin vers ce terminal quelles que soient sa nature et sa situation ainsi que celle d'un chemin de sens inverse pour les informations qui seront à transmettre de ce terminal appelé vers le terminal appelant, via le noeud initialement identifiée et la station de base 16 avec laquelle le terminal appelant est en communication. Ce chemin en sens inverse est établi en prenant en compte les données contenues dans le paquet initial qui correspondent au code d'appel qui est propre au terminal radiomobile appelant. Bien entendu les deux parties de chemin de sens inverse établies entre le noeud identifié et la station de base 16 du réseau radio cellulaire numérique initialement utilisée lors de l'appel sont susceptibles d'être modifiées de manière usuelle en ce domaine, si le déplacement du terminal radiomobile implique un changement de station de base en cours de communication.

L'entité de gestion du réseau privé 1 assure la mise en place des chemins de sens inverse qui lui sont demandés pour une communication en fonction de sa programmation et des possibilités de communication alors offertes par ce réseau privé et si besoin est par le ou les autres réseaux dont il peut éventuellement exploiter les liaisons de communication.

Bien entendu, un terminal radiomobile d'un système de communication selon l'invention peut éventuellement établir une communication interzone sans passer par le réseau privé de l'organisation dont il dépend, en utilisant une procédure d'appel classique, se distinguant de celle évoquée ci-dessus et dans le cadre de laquelle il n'est pas prévu d'émission de code d'identification d'un noeud du réseau privé en cas d'appel, si une telle procédure est autorisée à l'utilisateur.

## Revendications

1. Système de communication pour organisation et notamment entreprise, dont les communications sont assurées d'une part au travers d'un réseau de télécommunications privé (1) extension internationale et d'autre part au travers d'au moins un autre réseau de télécommunications (7, 7', 8 ou 8') qui permettent à un utilisateur d'un terminal radiomobile (5) accrédité de préempter l'établissement d'au moins une partie d'un chemin de communication par l'intermédiaire du réseau privé de l'organisation vers un terminal appelé, à partir d'un noeud (2) de ce réseau privé auquel il accède depuis une station de base (16) émettrice-réceptrice d'un réseau radio cellulaire numérique (7 ou 7') avec laquelle il entre en communication lorsqu'il appelle, caractérisé en ce que chaque terminal radiomobile accrédité comporte des moyens (12) pour combiner un code d'identification de la zone géographique, c'est-à-dire généralement du pays, où se trouve le terminal, qui est radio-transmise par une station de base avec laquelle ce terminal est en communication, avec une des indications codées, identifiant individuellement au moins certains des noeuds du réseau privé situés dans diverses zones, qui sont stockées au niveau du terminal et pour produire l'émission par le terminal radiomobile d'une numérotation d'appel comportant un code d'identification d'un des noeuds du réseau privé et un code d'appel de terminal et en ce que les noeuds du réseau privé qui sont susceptibles d'être ainsi désignés comportent des moyens (0) pour permettre l'établissement d'un appel vers un terminal à partir du code d'appel de ce terminal parvenu au noeud avec un code d'identification de ce noeud.

2. Terminal radiomobile pour système de communication d'une organisation et notamment d'une entreprise, dont les communications sont assurées d'une part au travers d'un réseau de télécommunications privé (1) extension internationale et d'autre part au travers d'au moins un autre réseau de télécommunications (7, 7', 8 ou 8') qui permettent l'un et l'autre à un utilisateur d'un terminal radiomobile (5) accrédité de préempter l'établissement d'au moins une partie d'un chemin de communication par l'intermédiaire du réseau privé de l'organisation vers le terminal appelé, à partir d'un noeud (2) de ce réseau privé auquel il accède depuis la station de base (16) de réseau radio cellulaire numérique avec laquelle il entre en communication lorsqu'il appelle, caractérisé en ce que ce terminal radiomobile comporte des moyens (12) pour combiner un code d'identification de la zone géographique, c'est-à-dire généralement du pays, où il se trouve, qui est fournie par une station de base avec laquelle il est en communication, avec une des indications codées. identifiant individuellement des noeuds du réseau privé dans diverses zones, qui sont stockées à son niveau pour produire et émettre une numérotation d'appel comportant un code d'identification d'un des noeuds de réseau privé et un code d'appel de terminal.

3. Terminal radiomobile, selon la revendication 2, caractérisé en ce qu'il comporte des moyens de mémorisation des indications codées d'identification des noeuds de réseau privé dans diverses zones, qui sont incorporés dans une mémoire (13A) qu'il comporte.

4. Terminal radiomobile, selon la revendication 2, caractérisé en ce qu'il comporte des moyens de mémorisation (13B) des indications d'identification des noeuds de réseau privé dans diverses zones, ou divers pays, qui sont inclus dans un module d'identification d'abonné dont la connexion est nécessaire au fonctionnement de ce terminal.

5. Terminal radiomobile, selon l'une des revendications 2, 3, 4, caractérisé en ce qu'il est de type GSM ou DECT.
